# EUROPÄISCHE PATENTANMELDUNG

(11) **EP 0 523 338 A2**
(43) Veröffentlichungstag der Anmeldung: **20.01.1993**
(21) Anmeldenummer: 92108029.7
(22) Anmeldetag: 13.05.1992
(51) Int. Cl.: B60T 7/12

(54) **Verfahren zum Steuern einer Bremsvorrichtung gegen Rückwärtsrollen eines Kraftfahrzeugs beim Anfahren am Berg sowie Vorrichtung zur Durchführung des Verfahrens**

(30) Priorität: 16.07.1991 DE 4123462
(71) Anmelder: Volkswagen Aktiengesellschaft, D-38436 Wolfsburg (DE)
(72) Erfinder: Wahnschaffe, Nikolaus, Dipl.-Ing., W-3180 Wolfsburg 27 (DE); Heuer, Rudolph, Dipl.-Ing., W-3170 Gifhorn/Wilsche (DE)

(57) **Zusammenfassung**

Die Erfindung betrifft ein Verfahren sowie eine Vorrichtung zum Steuern einer Bremsvorrichtung gegen Rückwärtsrollen eines Kraftfahrzeugs beim Anfahren am Berg, bei dem die Bremsvorrichtung jeweils erst dann gelöst wird, wenn das vom Motor/Getriebe aufgebrachte wirksame Antriebsmoment groß genug ist, um das Kraftfahrzeug auch bei gelöster Bremsvorrichtung am Rückwärtsrollen zu hindern. An bremskraftabstützenden Teilen des Fahrzeuges, vorzugsweise an Teilen der Bremsvorrichtung selbst oder an Teilen der Radaufhängung, sind Sensoren 10a, 10b zur Erfassung der Richtung der Bremskraftabstützung angeordnet, deren Sensorsignale einer elektronischen Steuer- und Regeleinrichtung (9) zugeführt werden, welche ein Steuersignal zum selbsttätigen Lösen der Bremsvorrichtung erzeugt, sobald sie aus den ihr zugeführten Sensorsignalen eine Richtungsumkehr der Bremskraftabstützung ermittelt hat.

## Beschreibung

Die Erfindung betrifft ein Verfahren zum Steuern einer Bremsvorrichtung gegen Rückwärtsrollen eines Kraftfahrzeugs beim Anfahren am Berg der im Oberbegriff des Patentanspruchs 1 genannten Art sowie Vorrichtungen zur Durchführung des Verfahrens.

Das Anfahren eines konventionellen Kraftfahrzeugs am Berg gehört bedienungstechnisch zu den schwierigsten Aufgaben, die der Fahrer des Fahrzeugs durchführen muß, weil hierbei die gleichzeitige Betätigung des Kupplungspedals und des Gaspedals sowie des Handbremshebels sehr genau und gut dosiert aufeinander abgestimmt werden muß, weil es andernfalls entweder zum Zurückrollen des Fahrzeugs kommt oder aber zum Abwürgen des Fahrmotors.

Um dem Fahrer das Anfahren am Berg, d. h. an einer mehr oder weniger steilen Steigung zur erleichtern, sind zum Teil sehr unterschiedlich konzipierte Berganfahrhilfen, häufig auch "hill-holder" genannt, entwickelt worden. Diese bekannten Rückrollverhinderer bzw. Berganfahrhilfen basieren im wesentlichen darauf, daß zum einen der in der hydraulischen Bremsanlage zum Anhalten des Fahrzeugs aufgebaute Bremsdruck auch nach dem Loslassen des Bremspedals aufrechterhalten wird, und daß zum anderen diese am Berg angezogene Bremsvorrichtung beim Anfahren wieder selbsttätig gelöst wird, der Fahrer also von der Notwendigkeit entbunden ist, einen Handbremshebel - abgestimmt auf sein gleichzeitiges Betätigen des Kupplungs- und des Gaspedals - feinfühlig zu lösen.

Das Aufrechterhalten des Bremsdrucks wird dabei mit Hilfe von in der hydraulischen Bremsanlage angeordneten Ventilvorrichtungen bewerkstelligt, die entweder mittels einer elektronischen Steuer- und Regeleinrichtung selbsttätig oder aber manuell, z. B. durch Betätigen eines Schalters o. ä. aktiviert werden.

Das Lösen der auf diese Weise angezogenen Bremsvorrichtung beim Anfahren erfolgt beim Betätigen des Kupplungs- und/oder Gaspedals selbsttätig durch Deaktivieren dieser Ventilvorrichtungen.

Bei einer dieser bekannten Berganfahrhilfen (z. B. Zeitschrift "Autotechnik", 1984, Nr. 2, Seite 28, Bild 3) ist zwischen dem Hauptbremszylinder und dem einen Kreis der zweikreisigen Bremsanlage eine als Druckhalteventil ausgebildete Ventilvorrichtung angeordnet, deren in einem Zylinderraum gelagertes massebehaftetes kugelförmiges Ventilglied an Steigungen, d. h. am Berg durch sein Eigengewicht in Richtung seines Ventilsitzes rollt und dadurch - sofern es auf diesem zur Anlage kommt - den Hydraulikrücklauf zum Hauptbremszylinder absperrt. Durch einen mit der Kupplungsbetätigung gekoppelten Stößel bzw. Druckstift wird das kugelförmige Ventilglied jedoch normalerweise, d. h. bei nichtbetätigtem Kupplungspedal an einer Anlage am Ventilsitz gehindert, so daß der Rücklauf zum Hauptbremszylinder grundsätzlich auch an Steigungen geöffnet ist. Bei niedergetretenem Kupplungspedal ist dieser Rücklauf an Steigungen dagegen durch das am Ventilsitz anliegende Ventilglied gesperrt. Auch nach einem Loslassen des Bremspedals bleibt hierdurch der zuvor aufgebaute Bremsdruck in diesem Bremskreis erhalten, sofern das Kupplungspedal niedergetreten bleibt. Wenn der Fahrer beim Anfahren die "Kupplung wieder kommen läßt", d. h. das niedergetretene Kupplungspedal langsam in seine Ruheposition zurückkehren läßt, dann wird selbsttätig gleichzeitig auch die angezogene Bremsvorrichtung langsam gelöst, weil dabei das Ventilglied durch den Stößel langsam von seinem Ventilsitz abgehoben wird. Es bestehen somit an jeder Steigung grundsätzlich gute Voraussetzungen, das Fahrzeug anzufahren, ohne daß es zurückrollt. Nach wie vor muß der Fahrer aber ein Gefühl für das steigungsabhängige Zusammenspiel zwischen der Betätigung von Kupplungspedal einerseits und Gaspedal andererseits entwickeln. Nachteilig ist auch, daß das Kupplungspedal während des ganzen Halts am Berg niedergetreten bleiben muß, um die angezogene Bremsvorrichtung nicht zu lösen.

Bekannt ist auch eine Berganfahrhilfe (z. B. Publikation der FAG Kugelfischer Georg Schäfer KGaA, Publikations-Nr. HB 43601 DA), bei welcher der zum Halten an einer Steigung erzeugte Bremsdruck zumindest in einem der Bremskreise mittels eines Magnetventils auch nach Loslassen des Bremspedals aufrechterhalten wird. Dazu muß der Fahrer nach dem Bremsen und Auskuppeln einen im Erregerstromkreis des Magnetventils liegenden Taster (elektrischer Schalter) betätigen. In Reihe zu diesem Taster ist ein mit dem Kupplungspedal gekoppelter weiterer elektrischer Schalter angeordnet, der beim Auskuppeln, d. h. bei niedergetretenem Kupplungspedal, geschlossen ist und beim Einkuppeln, d. h. beim "Kommen lassen" des Kupplungspedals am sogenannten Kupplungspunkt geöffnet wird.

Wenn der Fahrer beim Anfahren wieder einkuppelt, d. h. das Kupplungspedal in seine Ruhelage zurückführt, dann wird auch bei dieser Anordnung die angezogene Bremsvorrichtung selbsttätig, d. h. ohne besonderen Eingriff des Fahrers gelöst, nämlich in dem Moment, in dem der zweite Schalter am sogenannten Kupplungspunkt öffnet und so den Stromkreis des Magnetventils öffnet, wodurch sich der zuvor quasi "eingesperrte" Bremsdruck abbauen kann. Auch bei dieser Berganfahrhilfe muß das Kupplungspedal während des gesamten Halts am Berg niedergetreten bleiben und auch hier muß der Fahrer ein Gefühl für das steigungsabhängige Zusammenspiel zwischen der Betätigung des Kupplungspedals und des Gaspedal entwickeln.

Bei einer anderen bekannten Berganfahrhilfe (DE-OS 38 32 025) eines mit einer Anfahrschlupfregelung (ASR) und einem Antiblockiersystem (ABS) ausgestatteten Fahrzeuges wird eines der im Rahmen der Anfahrschlupfregelung erforderlichen Magnetventile dazu benutzt, den an einer Steigung zum Halten des Fahrzeugs aufgebauten Bremsdruck auch nach Loslassen des Bremspedals aufrechtzuerhalten, wozu der Fahrer manuell einen dieses Magnetventil aktivierenden elektrischen Schalter betätigen muß. Das Lösen der so aktivierten Bremsvorrichtung wird beim Anfahren am Berg durch Auswertung von Sensorsignalen ermittelt, die entweder, z. B. bei Fahrzeugen mit Schaltgetriebe, das Lösen der Kupplung oder das Betätigen des Gaspedals ermitteln, und zwar unter Berücksichtigung und Auswertung einer minimalen Motordrehzahl.

Bei einer anderen bekannten Berganfahrhilfe (DE-OS 29 11 372), die bevorzugt bei Lastkraftwagen mit einer Federspeicherhilfsbremse zur Anwendung kommen soll, sind an einem nicht der Feststellbremse zugeordneten Fahrzeugrad oder an der Tachowelle o. ä. zwei Sensoren zur Erfassung der Drehrichtung und der Drehgeschwindigkeit dieses Rades angeordnet, deren Ausgangssignale zusammen mit einem vom Schaltgetriebe kommenden Sensorsignal einem Logikteil, d. h. einer elektronischen Steuer- und Regeleinrichtung zugeführt werden. Da die beiden Radsensoren sehr geringe Radgeschwindigkeiten erfassen müssen, müssen hierfür hochwertige aktive Wandler, wie beispielsweise Halleffektelemente oder Lichtschranken eingesetzt werden. Das Logikteil ist derart ausgebildet, daß es u. a. erkennt, ob die Drehrichtung der Fahrzeugräder mit dem eingelegten Gang des Schaltgetriebes harmonieren oder nicht. So erkennt sie auch, z. B. beim Anfahren am Berg, wenn das Fahrzeug rückwärts rollt, obgleich der Rückwärtsgang nicht eingeschaltet ist. Bei einer solchen Konstellation gibt sie ein Steuersignal ab, das die Entlüftung eines Federspeicherbremszylinders veranlaßt, wodurch das rollende Fahrzeug gebremst wird.

Beim Anfahren am Berg rollt dieses bekannte Fahrzeug nach Lösen der Handbremse zunächst etwas zurück, worauf es durch das Logikteil selbsttätig durch Entlüftung des Federspeicherbremszylinders wieder gebremst wird. Sobald das Fahrzeug wieder zum Stillstand gekommen ist, wird der Federspeicherbremszylinder wieder belüftet, d. h. die Bremsvorrichtung gelöst. Dieser Vorgang wiederholt sich unter Umständen mehrmals, nämlich solange, bis die vom Motor/Getriebe aufgebrachte wirksame Antriebskraft größer geworden ist als die das Zurückrollen des Fahrzeugs bewirkende Hangabtriebskraft.

Vor diesem Hintergrund liegt der Erfindung die Aufgabe zugrunde, ein Verfahren zum Steuern einer Bremsvorrichtung gegen Rückwärtsrollen eines Kraftfahrzeugs beim Anfahren am Berg sowie Vorrichtungen zur Durchführung dieses Verfahrens zu schaffen, das sich nicht nur durch Einfachheit und geringen Aufwand, sondern auch durch Zuverlässigkeit und Komfort auszeichnet.

Diese Aufgabe wird erfindungsgemäß durch die Merkmale des Patentanspruchs 1 gelöst.

Vorteilhafte Weiterbildungen und Ausgestaltungen der Erfindung sind in den Unteransprüchen angegeben.

Erfindungsgemäß wird an bremskraftabstützenden Teilen des Fahrzeugs, z. B. an den Radbremsen selbst oder aber an Teilen der Radaufhängung, die Richtung der Bremskraftabstützung des am Berg haltenden Fahrzeuges mit Hilfe von geeigneten Sensoren erfaßt und eine in einer elektronischen Steuer- und Regeleinrichtung aus diesen Sensorsignalen ermittelte Richtungsumkehr der Bremskraftabstützung als Steuersignal zum Lösen der angezogenen Bremsvorrichtung verwendet.

Anhand einiger in der Zeichnung schematisch dargestellter Ausführungsbeispiele wird die Erfindung nachstehend näher erläutert.

In der Zeichnung zeigen in zum Teil prinzipienhafter Darstellung
- Fig. 1: einen Ausschnitt aus einer hydraulischen Bremsanlage mit Berganfahrhilfe unter Einsatz eines ersten Ausführungsbeispiels der erfindungsgemäßen Vorrichtung,
- Fig. 2: einen Ausschnitt aus einer hydraulischen Bremsanlage unter Einsatz eines zweiten Ausführungsbeispiels der erfindungsgemäßen Vorrichtung,
- Fig. 3: die Innenansicht einer für den Einsatz in einer erfindungsgemäßen Vorrichtung modifizierten Innenbacken-Trommelbremse und
- Fig. 4: die teilgeschnittene Ansicht einer für den Einsatz in einer erfindungsgemäßen Vorrichtung modifizierten Schwimmrahmen-Scheibenbremse.

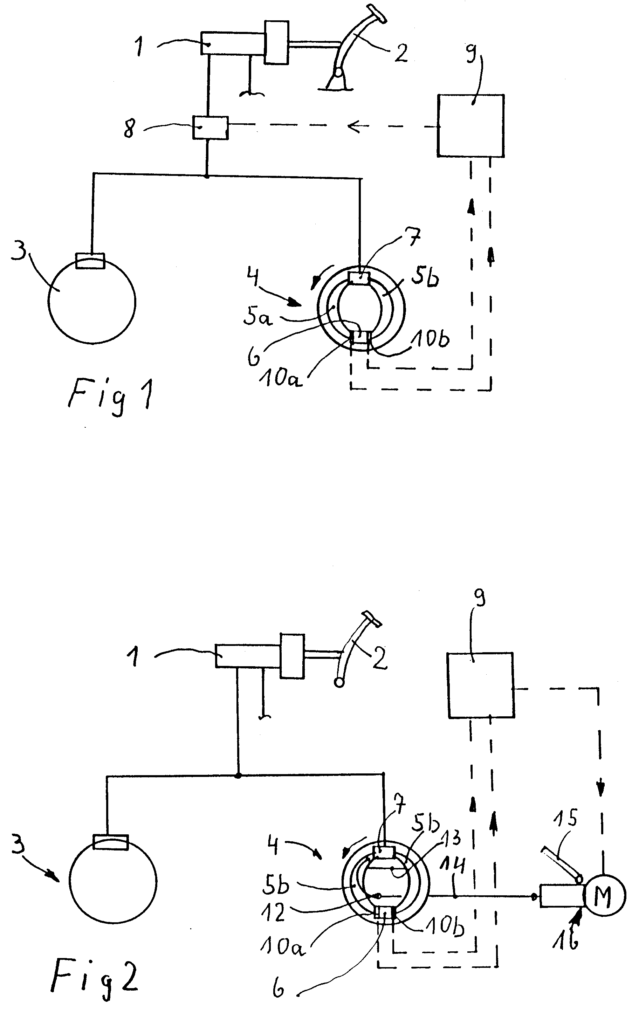

Die Figuren 1 und 2 zeigen jeweils eine im wesentlichen bekannte hydraulische Zweikreisbremsanlage eines Kraftfahrzeugs, von der jedoch nur einer der beiden jeweils eine Vorderradbremse und eine Hinterradbremse enthaltende Bremskreis dargestellt ist. Beispielhaft ist die Vorderradbremse als Scheibenbremse 3 und die Hinterradbremse als Trommelbremse 4 ausgeführt. Der Bremsdruck für die beiden Bremsen wird während des Fahrbetriebs wie üblich von einem durch ein Bremspedal 2 beaufschlagten hydraulischen Hauptbremszylinder 1 erzeugt. In der in Fig. 1 dargestellten Bremsanlage ist zwischen dem Hauptbremszylinder 1 und dem die dargestellten Radbremsen enthaltenden Bremskreis eine vorzugsweise als Magnetventil ausgebildete bekannte Ventilvorrichtung 8 zwischengeschaltet, die Teil einer Berganfahrhilfe (hill-holder), d. h. Teil einer Bremsvorrichtung gegen Rückwärtsrollen des Fahrzeugs beim Anfahren am Berg ist. Diese während des normalen Fahrbetriebs geöffnete, d. h. durchlässige Ventilvorrichtung wird durch eine u. a. Logikbausteine enthaltende, nur prinzipienhaft dargestellte elektronische Steuer- und und Regeleinrichtung 9 in bekannter Weise beim Anhalten des Fahrzeugs, zumindest aber beim Anhalten am Berg, d. h. an einer Steigung, in einen Schaltzustand gebracht, in dem die hydraulische Leitung zwischen dem die beiden Bremsen 3 und 4 enthaltenden Bremskreis und im Hauptbremszylinder 1 unterbrochen ist, d. h. ein Rücklauf der Hydraulikflüssigkeit von den Radbremsen zum Hauptbremszylinder verhindert wird. Auf diese Weise wird der zu diesem Zeitpunkt in den Radbremsen herrschende Bremsdruck quasi "eingesperrt", d. h. er wird auch dann aufrechterhalten, wenn das zuvor zum Anhalten des Fahrzeugs betätigte Bremspedal 2 wieder losgelassen wird. In welcher Weise diese Ventilvorrichtung 8 im einzelnen aktiviert wird, d. h. ob die Aktivierung selbsttätig aufgrund irgendwelcher ermittelter Sensorsignale oder aber durch manuelle Betätigung eines Schalters o. ä. erfolgt, ist für die vorliegende Erfindung ohne Bedeutung.

Bei bekannten Berganfahrhilfen wird beim Anfahren am Berg zum Lösen der angezogenen Bremsvorrichtung - mit Bezug auf Fig. 1 also zum "Öffnen" der sich im Sperrzustand befindlichen Ventilvorrichtung 8 - auf Sensoren zurückgegriffen, welche den Betriebszustand bzw. den Betätigungszustand der Kupplung bzw. des Kupplungspedals und/oder des Gaspedals und/oder der Motordrehzahl sensieren und die Sensorsignale der elektronischen Steuer- und Regeleinrichtung zuführen, welche daraus dann - quasi mittelbar - den Zeitpunkt bzw. die Betriebssituation ermittelt, die im Hinblick auf das angestrebte Vermeiden eines Zurückrollens zum Losen der angezogenen Bremsvorrichtung geeignet erscheint.

Beim erfindungsgemäßen Verfahren zum Steuern der Bremsvorrichtung gegen Rückwärtsrollen beim Anfahren am Berg werden im Gegensatz dazu nicht Betriebs- oder Betätigungszustände von Kupplungs- und/oder Gaspedal o. ä. gemessen, sondern es wird die Richtung der Bremskraftabstützung selbst an bremskraftabstützenden Teilen des Fahrzeugs erfaßt, d. h. an Bauteilen der Radaufhängung, die im Zuge des Kraftflusses der Bremskraftabstützung liegen. Die elektronische Steuer- und Regeleinrichtung 9, der entsprechende Sensorsignale zugeführt werden, gibt dann ein Steuersignal zum Lösen der Bremsvorrichtung, d. h. zum Umschalten der Ventilvorrichtung 8 ab, wenn sie aus den ihr zugeführten Sensorsignalen eine Richtungsumkehr der Bremskraftabstützung erkennt.

Eine solche Richtungsumkehr der Bremskraftabstützung ist nämlich dafür signifikant, daß das vom Motor/Getriebe des Fahrzeugs aufgebrachte, an den Antriebsrädern wirksame Antriebsmoment gerade groß genug geworden ist, um das Kraftfahrzeug, und zwar insbesondere auch das am Berg haltende Kraftfahrzeug, nach vorn zu bewegen, also am Rückrollen zu hindern. Diese eindeutige Signifikanz besteht völlig unabhängig vom jeweiligen Beladungszustand des Fahrzeugs sowie von der Größe der Fahrbahnsteigung.

Die Richtung der Bremskraftabstützung und deren Umkehr wird mit Hilfe von Sensoren erfaßt, die an im Kraftfluß der Bremsabstützkräfte befindlichen Bauteilen der Radaufhängung angeordnet sind. Hierfür eignen sich insbesondere Teile der Bremsvorrichtung selbst oder z. B. Lager der Radaufhängung.

In den Prinzipdarstellungen der Figuren 1 und 2 sind Anordnungen dargestellt, bei denen Sensoren 10a, 10b zur Erfassung der Richtung der Bremskraftabstützung innerhalb der Trommelbremse 4 angeordnet sind, und zwar am Widerlager 6, an dem sich die beiden Bremsbacken 5a, 5b in Umfangsrichtung der nicht weiter dargestellten Bremstrommel abstützen. Die beiden Bremsbacken liegen also nicht wie sonst üblich unmittelbar am Widerlager an, sondern unter Zwischenschaltung der Sensoren.

Die Sensoren können entweder nach Art von Kraftmessern ausgebildet sein oder nach Art von Wegeschaltern; Voraussetzung für den Einsatz von Sensoren nach Art von Wegeschaltern ist, daß am Ort des Einbaus dieser Sensoren im Zusammenhang mit der Bremskraftabstützung bzw. deren Richtung erfaßbare geeignete Relativbewegungen zwischen den relevanten Bauteilen auftreten.

Es sei angenommen, daß in den Prinzipdarstellungen der Figuren 1 und 2 als Kraftmesser ausgebildete Sensoren eingesetzt sind. Vorgesehen sind jeweils zwei Sensoren. Der eine Sensor 10a ist zwischen dem Widerlager 6 und dem sich an diesem abstützenden Ende der auflaufenden Bremsbacke 5a und der andere Sensor 10b zwischen dem Widerlager und dem sich daran abstützenden Ende der ablaufenden Bremsbacke 5b angeordnet; hierbei wurde angenommen, daß die nicht weiter dargestellte Bremstrommel sich - bei Vorwärtsfahrt - in Pfeilrichtung dreht.

Die von Sensoren 10a, 10b erzeugten Sensorsignale, die jeweils den (Bremsabstütz-)Kräften proportional sind, mit denen sich die Bremsbacken 5a bzw. 5b am Widerlager 6 abstützen, werden die elektronischen Steuer- und Regeleinrichtung 9 zugeführt, wie u. a. eine Einrichtung zur Bildung der Differenz der beiden Sensorsignale enthält.

Es ist leicht erkennbar, daß die Bremskraftabstützung bei einem an einer Steigung haltenden Fahrzeug im Bereich des Widerlagers 6 im wesentlichen ausschließlich auf der die ablaufende, d. h. in der Zeichnung die rechte Bremsbacke 5b abstützenden Seite erfolgt. Wenn in der elektronischen Steuer- und Regeleinrichtung 9 bei der Differenzbildung jeweils das Sensorsignal des Sensors 10a vom Sensorsignal des Sensors 10b subtrahiert wird, dann besitzt die ermittelte Differenz bei diesem Zustand ein positives Vorzeichen.

Wenn nun beim Anfahren am Berg bei angezogener Bremsvorrichtung, d. h. bei angezogener Trommelbremse 4 durch aufeinander abgestimmtes Betätigen von Gaspedal und Kupplungspedal an den Antriebsrädern des Fahrzeuges ein Antriebsmoment zur Wirkung gebracht wird, dann nimmt die vom Sensor 10b gemessene Bremsabstützkraft in dem Maße ab, wie das an den Antriebsrädern aufgebrachte Antriebsmoment zunimmt. Gleichzeitig wächst aber - bei unverändert angezogener Bremsvorrichtung - die vom anderen Sensor 10a erfaßte Anpreßkraft zwischen Bremsbacke 5a und Widerlager 6, so daß die in der elektronischen Steuer- und Regeleinrichtung 9 gebildete Differenz der beiden Sensorsignale sich entsprechend verändert und - bei entsprechendem Anstieg des an den angetriebenen Rädern zur Wirkung gebrachten Antriebsmoments - schließlich ihr Vorzeichen umkehrt. Diese Vorzeichenumkehrung entspricht der Richtungsumkehr der Bremskraftabstützung am Widerlager 6. Sie tritt dann ein, wenn das Antriebsmoment so groß geworden ist, daß es die wirksame steigungsbedingte Hangabtriebskraft kompensiert.

Die elektronische Steuer- und Regeleinrichtung 9 ist nun derart ausgebildet, daß sie ein Steuersignal zum selbsttätigen Lösen der Bremsvorrichtung abgibt, im Ausführungsbeispiel nach Fig. 1 also ein Steuersignal zum Umschalten der bis dahin gesperrten Ventilvorrichtung 8 in ihren geöffneten Zustand, sobald sie aus den ihr zugeführten beiden Sensorsignalen ein Vorzeichenwechsel der Signaldifferenz, d. h. also eine Richtungsumkehr der Bremskraftabstützung ermittelt.

Wenn zu diesem Zeitpunkt die Bremsvorrichtung gelöst wird, ist das an den Antriebsrädern wirksame Antriebsmoment groß genug, um das Fahrzeug an der Steigung anfahren zu lassen; ein unerwünschtes Zurückrollen des Fahrzeugs tritt somit mit Sicherheit nicht ein. Es liegt auf der Hand, daß dieses Lösen der Bremsvorrichtung nicht im mathematischen Sinne exakt schon bei der Vorzeichenumkehrung der Signaldifferenz durchgeführt werden muß, sondern durchaus etwas später, aber möglichst nicht viel später.

Beim erfindungsgemäßen Verfahren kommt es nicht auf die Erfassung der genauen Größe der Bremskraftabstützung an, sondern auf die Erfassung deren Richtung bzw. deren Richtungsumkehr, was meßtechnisch wesentlich einfacher und unter Einsatz vergleichsweise preiswerter Sensoren und unkomplizierter elektronischer Einrichtungen möglich ist.

Wie bereits eingangs ausgeführt wurde, spielt es für die Anwendung des erfindungsgemäßen Verfahrens im allgemeinen keine Rolle, mit welcher Art von Bremsanlage das Fahrzeug ausgerüstet ist und in welcher Weise die Bremsvorrichtung der Berganfahrhilfe bei einem Halt am Berg aktiviert wird. Es kann also grundsätzlich eingesetzt werden sowohl bei Bremsanlagen mit einem Antiblockiersystem (ABS) und/oder einer Anfahrschlupfregelung (ASR) als auch beim Bremsanlagen ohne solche Systeme, wie dies in den Figuren 1 und 2 angedeutet ist.

In Fig. 2 ist beispielhaft eine Anordnung dargestellt, bei der die im Rahmen der Berganfahrhilfe aktivierte Bremsvorrichtung nicht wie in Fig. 1 über den Hydraulikkreis, d. h. über den Radbremszylinder 7 der Trommelbremse betätigt wird, sondern über einen mechanischen Bremshebel 12, wie er bei Trommelbremsen in Verbindung mit der Handbremsbetätigung üblich ist. Der Bremshebel 12 wird bei dieser Anordnung beim Anhalten am Berg über eine elektromotorische Betätigungseinrichtung 16, die im übrigen Teil der normalen Kraftahrzeug-Feststellbremseinrichtung ist, betätigt. Solche elektromotorischen Stelleinrichtungen sind beispielsweise - auch in Verbindung mit Berganfahrhilfen - aus den internationalen Anmeldungen WO 90/15734 und WO 90/15743 bekannt.

Auch bei der in Fig. 2 dargestellten Anordnung wird beim Anfahren am Berg von der elektronischen Steuer- und Regeleinrichtung 9 bei einer Richtungsumkehr der Bremskraftabstützung ein Steuersignal abgegeben, nun für die elektromotorische Betätigungseinrichtung 16, wodurch diese die mechanisch angezogene Trommelbremse löst.

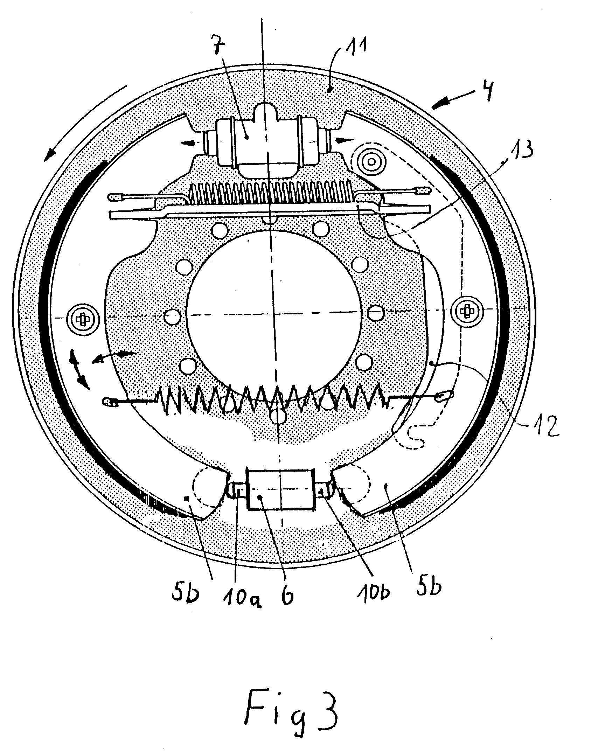

In Fig. 3 ist die Innenansicht einer Trommelbremse 4 (ohne Bremstrommel) dargestellt, bei der die zur Erfassung der Richtung der Bremskraftabstützung am Widerlager 6 angeordneten Sensoren 10a und 10b als im Widerlager in Umfangsrichtung verschieblich gelagerte elektrische Schaltstößel, d. h. als Wegeschalter ausgebildet sind, die bei ihrer Verlagerung in die eine Umfangsrichtung einen ersten Schaltzustand und bei ihrer Verlagerung in die andere Umfangsrichtung einen zweiten Schaltzustand einnehmen, also ein Ja-/Nein- bzw. Ein-/Aus-Signal für die elektronische Steuer- und Regeleinrichtung 9 zur Verfügung stellen. Die beiden Bremsbacken 5a und 5b sind - über die Sensoren 10a und 10b jeweils gleitend am Widerlager 6 gelagert, wie dies prinzipienhaft mit Pfeilen angedeutet ist. Im Gegensatz dazu können die Bremsbacken bei Anordnungen mit als Kraftmessern ausgebildeten Sensoren auch über feste Drehpunkte am Widerlager abgestützt sein.

Der Radbremszylinder 7 ist als zweiseitig wirkender Radbremszylinder ausgebildet und am mit dem Radträger bzw. Achsschenkel verbundenen Bremsträgerblech 11 mit einem gewissen in Umfangsrichtung wirksamen Spiel, z. B. mit Hilfe von zwischengeschalteten gummielastischen Elementen o. ä. befestigt. Das bedeutet, daß die beiden Bremsbacken 5a, 5b und der Radbremszylinder 7 sowie die beiden Sensoren 10a, 10b bei druckbeaufschlagtem Radbremszylinder, d. h. bei an der nicht weiter dargestellten Bremstrommel angepreßten Bremsbacken als Einheit entweder etwas in die eine Umfangsrichtung oder aber in die andere Umfangsrichtung verlagert wird, nämlich jeweils solange, bis sie entweder an der einen oder an der anderen Seite des fest angeordneten Widerlagers 6 zur Anlage kommt. Die Drehrichtung hängt dabei von der Richtung des an der Bremstrommel wirksamen Moments ab.

Es ist leicht erkennbar, daß diese Einheit aus Bremsbacken 5a, 5b und Radbremszylinder 7 bei einem Halt am Berg unter der Wirkung der Hangabtriebskräfte eine Verdrehung im Uhrzeigersinn erfährt (vorausgesetzt, daß bei Vorwärtsfahrt die mit Pfeil angedeutete Drehrichtung vorliegt). Diese Einheit stützt sich daher am Widerlager 6 über den als elektrischen Schaltstößel ausgebildeten rechten Sensor 10b ab, wodurch dieser tiefer in das Widerlager o. ä. einfährt und dabei in einen Schaltzustand umgeschaltet wird, welcher der elektronischen Steuer- und Regeleinrichtung 9 signalisiert, daß in dieser Richtung eine Bremsabstützkraft vorliegt. Der linke Sensor 10a wird während dieser Zeit dagegen nicht kraftbeaufschlagt, so daß er seinen anderen Schaltzustand einnimmt, der elektronischen Steuer- und Regeleinrichtung 9 also signalisiert wird, daß in dieser Richtung keine Bremsabstützkraft wirksam ist.

Wenn nun beim Anfahren am Berg an den angetriebenen Rädern des Fahrzeuges ein wachsendes Antriebsmoment zur Wirkung gebracht wird, dann wird wiederum im gleichen Maße die am Widerlager 6 wirksame Bremsabstützkraft abgebaut und - bei nach wie vor druckbeaufschlagtem Radbremszylinder 7 - die Einheit aus Bremsbacken 5a, 5b und Radbremszylinder 7 schließlich durch die Bremstrommel entgegengesetzt zum Uhrzeigersinn relativ zum Bremsträgerblech 11 verschoben, wobei letztlich der linke Sensor 10a unter Änderung seines Schaltzustandes tiefer in das Widerlager 6 eingeschoben und der rechte Sensor 10b ebenfalls unter Änderung seines Schaltzustandes entlastet wird. Diese Richtungsumkehr der Bremskraftabstützung am Widerlager 6 wird von der elektronischen Steuer- und Regeleinrichtung 9 erkannt und bewirkt die Erzeugung eines die Bremsvorrichtung der Berganfahrhilfe lösenden Steuersignals; es wird also z. B. wieder eine sich in ihrem sperrenden Zustand befindliche Ventileinrichtung ähnlich Fig. 1 in ihren geöffneten Zustand umgeschaltet, so daß der Bremsdruck im Radbremszylinder 7 der Trommelbremse 4 abgebaut wird.

Wie zuvor bereits erwähnt, können die Sensoren zur Erfassung der Richtung der Bremskraftabstützung in ganz ähnlicher Weise auch an den Scheibenbremsen der Bremsanlage angeordnet werden, wenn diese Teil der Bremsvorrichtung der Berganfahrhilfe sind.

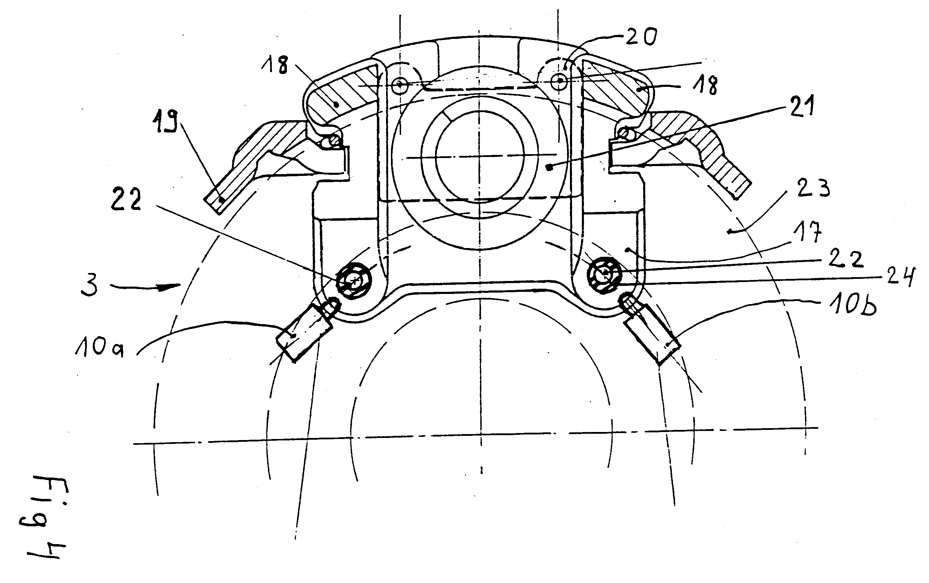

In Fig. 4 ist prinzipienhaft eine derartige Anordnung dargestellt. Diese Figur zeigt in teilgeschnittener Darstellung eine im wesentlichen übliche Scheibenbremse des sogenannten Schwimmrahmentyps, deren Bremshalter mit 17 und deren axial verschieblich am Bremshalter gelagerter Schwimmrahmen mit 19 beziffert sind. Der Bremshalter trägt in üblicher Weise zwei die Bremsscheibe 23 axial übergreifende beabstandete Stützarme 18, an denen die zwischen ihnen gelagerten Bremsbeläge 20 bei druckbeaufschlagtem Radbremszylinder 21 in Umfangsrichtung abgestützt werden. Der Bremshalter 17 ist über Schraubbolzen 22 o. ä. am nicht weiter dargestellten Radträger bzw. Achsschenkel befestigt.

Bei einer solchen Scheibenbremsenanordnung könnte die Richtung der Bremskraftabstützung z. B. im Bereich Stützarme 18/Bremsbeläge 20 oder aber im Befestigungsbereich des Bremshalters 17 am nicht weiter dargestellten Radträger, d. h. im Bereich der Schraubbolzen 22 erfaßt werden. Die Sensoren könnten also jeweils zwischen den Bremsbelägen 20 einerseits und den beiden Stützarmen 18 angeordnet werden, von denen ein erster dann die in der einen Umfangsrichtung und ein zweiter die in der anderen Umfangsrichtung wirksame Abstützkraft erfaßt und als entsprechendes Sensorsignal der elektronischen Steuer- und Regeleinrichtung zuführt.

Wenn die Sensoren hierbei nicht wieder als Kraftmesser ausgebildet werden, sondern - ähnlich Fig. 3 - als in Umfangsrichtung verschieblich gelagerte elektrische Schaltstößel, dann muß konstruktiv natürlich dafür gesorgt sein, daß die zwischen den beiden Stützarmen 18 angeordneten Bremsbeläge 20 sich bei druckbeaufschlagtem Radbremszylinder mit einem gewissen Spiel in Umfangsrichtung relativ zu den Stützarmen 18 verlagern können, weil zur Betätigung der Schaltstößel ein gewisser Schaltweg benötigt wird. Diese Relativverlagerung kann z. B. mit Hilfe von zwischen den Bremsbelägen und den Stützarmen angeordneten gummielastischen o. ä. Elementen realisiert werden, die auf der einen Seite im ausreichenden Umfang eine Relativbewegung zulassen, andererseits aber unangenehme Klappergeräusche o. a. unterbinden.

In Fig. 4 ist nun ein Beispiel dargestellt, bei dem die der Erfassung der Richtung der Bremskraftabstützung dienenden Sensoren 10a, 10b im Bereich der radträgerseitigen Befestigungsteile der Scheibenbremse, d. h. im Bereich der Schraubbolzen 22 angeordnet sind. Im dargestellten Ausführungsbeispiel sind die von den Schraubbolzen 22 durchgriffenen Bohrungen des Bremshalters 17 mit gummielastischen o. ä. Buchsen 24 ausgekleidet, so daß sich die Scheibenbremse, d. h. insbesondere die Einheit aus Bremshalter 17 und Bremsbelägen 20 bei druckbeaufschlagtem Radbremszylinder 20 im Rahmen der Elastizität dieser gummielastischen Buchsen 24 in Umfangsrichtung relativ zu den Schraubbolzen 22, d. h. relativ zum nicht weiter dargestellten Radträger verlagern kann. Die beiden Sensoren 10a und 10b sind mit ihrem Gehäuse o. ä. radträgerfest (oder schraubbolzenfest) angeordnet. Ihre Stößel sind dagegen mit dem Bremshalter 17 oder Teilen davon gekoppelt, so daß eine Relativbewegung zwischen Bremshalter 17 und Radträger zu einer Betätigung des Stößels führt. Die beiden Sensoren sind räumlich nun derart ausgerichtet, daß der eine die in der einen Umfangsrichtung und der andere die in der anderen Umfangsrichtung wirksame Abstützkraft erfaßt und in der oben erwähnten Weise der elektronischen Steuer- und Regeleinrichtung zur Auswertung zuführt.

Da die in den Scheiben- oder Trommelbremsen durch die Zuspannorgane, d. h. durch Radbremszylinder 7 oder Bremshebel 12 aufgebrachten Bremsmomente über den Radträger und die Radführungsglieder letztlich am Fahrzeugaufbau abgestützt werden, ist es auch möglich, eine signifikante Richtungsumkehr der Bremskraftabstützung nicht nur unmittelbar an der Scheibenbremse bzw. an der Trommelbremse zu erfassen, sondern auch an den Radführungsgliedern, insbesondere an deren radträgerseitigen oder aufbauseitigen Lagern. Auch in diesen Bereichen kann beim Anfahren am Berg mittels Sensoren die Umkehr in der Bremskraftabstützung erfaßt und zur Steuerung der Bremsvorrichtung der Berganfahrhilfe ausgenutzt werden.

Bei Radaufhängungen mit Federbeinen erscheint es besonders vorteilhaft, die Sensoren zur Erfassung der Richtung der Bremskraftabstützung im Bereich der im allgemeinen vergleichsweise großvolumigen aufbauseitigen Federbeinlager anzuordnen. Eine solche räumliche Anordnung hätte u. a. den Vorteil, daß die Sensoranordnung bereits aufbauseitig liegt und die Signalzuführung zur elektronischen Steuer- und Regeleinrichtung noch unproblematischer wird und daß die Sensoranordnung im übrigen in einem weitgehend vor Verschmutzung geschützten Bereich liegt.

## Patentansprüche

1. Verfahren zum Steuern einer Bremsvorrichtung gegen Rückwärtsrollen eines Kraftfahrzeugs beim Anfahren am Berg, bei dem die Bremsvorrichtung jeweils erst dann gelöst wird, wenn das vom Motor/Getriebe aufgebrachte wirksame Antriebsmoment groß genug ist, um das Kraftfahrzeug auch bei gelöster Bremsvorrichtung am Rückwärtsrollen zu hindern,
gekennzeichnet durch die Verwendung von an bremskraftabstützenden Teilen des Fahrzeugs, vorzugsweise an Teilen der Bremsvorrichtung selbst oder an Teilen der Radaufhängung, angeordnete Sensoren (10a, 10b) zur Erfassung der Richtung der Bremskraftabstützung, deren Sensorsignale einer elektronischen Steuer- und Regeleinrichtung (9) zugeführt werden, welche ein Steuersignal zum selbsttätigen Lösen der Bremsvorrichtung erzeugt, sobald sie aus den ihr zugeführten Sensorsignalen eine Richtungsumkehr der Bremskraftabstützung ermittelt hat.

2. Vorrichtung zur Durchführung des Verfahrens nach Patentanspruch 1 für Trommelbremsen (4) enthaltende Bremsvorrichtungen,
dadurch gekennzeichnet, daß die Sensoren (10a, 10b) innerhalb der Trommelbremse (4) angeordnet sind, vorzugsweise am die Bremsbacken (5a, 5b) in Umfangsrichtung der Bremstrommel abstützenden Widerlager (6).

3. Vorrichtung nach Patentanspruch 2,
dadurch gekennzeichnet, daß die Sensoren (10a, 10b) als Kraftmesser ausgebildet und jeweils zwischen dem Widerlager (6) und den sich daran abstützenden Enden der Bremsbacken (5a, 5b) angeordnet sind,
und daß, vorzugsweise als Teil der elektronischen Steuer- und Regeleinrichtung (9), eine Einrichtung zur Bildung der Differenz der beiden Sensorsignale vorgesehen ist.

4. Vorrichtung nach Patentanspruch 2, mit einem zweiseitig wirkenden Radbremszylinder (7) sowie mit am Widerlager (6) gleitend gelagerten Bremsbacken (5a, 5b),
dadurch gekennzeichnet, daß der Radbremszylinder (7) am Bremsträgerblech (11) mit in Umfangsrichtung wirksamem Spiel befestigt ist,
und daß die Sensoren (10a, 10b) jeweils zwischen dem Widerlager (6) und den sich daran abstützenden Enden der beiden Bremsbacken (5a, 5b) angeordnet und als im Widerlager (6) in Umfangsrichtung verschieblich gelagerte elektrische Schaltstößel ausgebildet sind, die bei ihrer Verlagerung in die eine Umfangsrichtung einen ersten Schaltzustand und bei ihrer Verlagerung in die andere Umfangsrichtung einen zweiten Schaltzustand einnehmen und der elektronischen Steuer- und Regeleinrichtung (9) so jeweils ein richtungssignifikantes Sensorsignal zuführen.

5. Vorrichtung zur Durchführung des Verfahrens nach Patentanspruch 1 für Scheibenbremsen (3) enthaltende Bremsvorrichtungen,
dadurch gekennzeichnet, daß die Sensoren (10a, 10b) zwischen den Bremsbelägen (20) und den diese in Umfangsrichtung abstützenden Teilen (18) der Scheibenbremse (3) oder zwischen den radträgerseitigen Befestigungsteilen (17) der Scheibenbremse (3) und den diese in Umfangsrichtung abstützenden Teilen des Radträgers (Achsschenkels) angeordnet sind.

6. Vorrichtung nach Patentanspruch 5,
dadurch gekennzeichnet, daß die Sensoren (10a, 10b) als Kraftmesser ausgebildet sind, von denen ein erster die in der einen Umfangsrichtung und ein zweiter die in der anderen Umfangsrichtung wirksame Abstützkraft erfaßt,
und daß, vorzugsweise als Teil der elektronischen Steuer- und Regeleinrichtung (9), eine Einrichtung zur Bildung der Differenz der beiden Sensorsignale vorgesehen ist.

7. Vorrichtung nach Patentanspruch 5,
dadurch gekennzeichnet, daß die Bremsbeläge (20) zwischen den sie in Umfangsrichtung abstützenden Teilen (18) mit Spiel gelagert sind,
und daß die Sensoren (10a, 10b) als in diesen Teilen in Umfangsrichtung verschieblich gelagerte elektrische Schaltstößel ausgebildet sind, die bei einer durch die Bremsbeläge (20) bewirkten Verlagerung in die eine Umfangsrichtung einen ersten Schaltzustand und in die andere Umfangsrichtung einen zweiten Schaltzustand einnehmen und der elektronischen Steuer- und Regeleinrichtung (9) so ein richtungssignifikantes Sensorsignal zuführen.

8. Vorrichtung nach Patentanspruch 5,
dadurch gekennzeichnet, daß die radträgerseitigen Befestigungsteile (17) der Scheibenbremse (3) unter Verwendung gummielastischer Elemente (24) mit in Umfangsrichtung wirksamem Spiel an den sie in Umfangsrichtung abstützenden Teilen (22) des Radträgers befestigt sind,
und daß die Sensoren (10a, 10b) als in Umfangsrichtung verschieblich gelagerte elektrische Schaltstößel ausgebildet sind, die bei einer durch die Befestigungsteile (17) bewirkten Verlagerung in die eine Umfangsrichtung einen ersten Schaltzustand und in die andere Umfangsrichtung einen zweiten Schaltzustand einnehmen und so der elektronischen Steuer- und Regeleinrichtung (9) ein richtungssignifikantes Sensorsignal zuführen.

9. Vorrichtung zur Durchführung des Verfahrens nach Patentanspruch 1,
dadurch gekennzeichnet, daß die Sensoren in aufbauseitigen Lagern der Radaufhängung angeordnet sind.
